# EUROPEAN PATENT APPLICATION

(11) **EP 2 276 251 A2**
(43) Date of publication of application: **19.01.2011**
(21) Application number: 10183950.4
(22) Date of filing: 27.02.2001
(51) Int. Cl.: H04N 7/173, H04N 5/782, H04N 5/445, H04N 7/167

(54) **System and method for internet access to personal television service**

(30) Priority: 02.03.2000 US 186551 P
(62) Divisional of application: 01913128.3
(71) Applicant: TiVo, Inc., Alviso, CA 95002-2160 (US)
(72) Inventor: Barton, James M., Los Gatos, CA 95032 (US); Platt, David C., Mountain View, CA 94043 (US)
(74) Representative: Dendorfer, Claus

(57) **Abstract**

A communication system and a family of methods for remote access to personal television service are disclosed. According to this invention, a remote personal TV service center provides centralized program guide information. A user may access to the personal TV center through a digital video recorder which is connected to the personal TV service center via telephone modem or a network server. A user may access to the personal TV service center through a remote computer terminal or a personal digital assistant which is connected to a computer network. The user selects program events and programs the digital video recorder by using a graphical user interface installed in the front panel of the digital video recorder in case of local programming, or using a similar GUI which is incorporated into the Web pages presented to remote users by a Web server in case of remote programming. The media stream stored in one digital video recorder may be transferred to another digital video recorder. For data security protection during data transfer, all communication are authenticated and encrypted.

## Description

### BACKGROUND OF THE INVENTION

### TECHNICAL FIELD

The invention relates to personal television service. More particularly, the invention relates to a communication system and methods for remote access to centralized personal television service via direct telephone connection or indirect network connection.

### DESCRIPTION OF THE PRIOR ART

With the advent of videocassette recorders (VCRs), TV viewers are able to record TV program events that are broadcasted in a given time slot and playback the recorded program content later. During the recording, a VCR changes the electrical signals of a program content into magnetic signals and stores the magnetic signals on magnetic tape. When playing back, the VCR changes magnetic signals into electrical signals and the attached TV set displays the program content of the signals on its screen.

With the development of digital technology, the VCRs are being superseded by digital video recorders (DVRs). Like a VCR, the functionality of a DVR is to record broadcasted program events and playback later. During recording, a DVR changes the electrical signals of a program content into digital information, such as MPEG data streams and stores the digital information in a memory device or directly stores the pre-digitized TV signals in the memory. When playing back, the DVR changes the digital information back to analog signals and the attached TV set displays the program content of the signals on its screen.

To record TV program events using a VCR, a TV viewer must manually select a channel and control the VCR or have somebody else to do it. By using a DVR, however, the TV viewer may establish a program recording sequence by programming the DVR according to a TV program guide and have the recording done automatically.

Although the DVR enables users to specify the recording time, channel, and duration for a plurality of events, it cannot meet the increasing needs in defining and capturing the program events in a more intelligent way. For instance, in situations where a user cannot find a TV program guide or he is far away from his DVR and TV set, he will be unable to program his DVR and record the program events that he likes.

What is desired is to establish a communication system through which a TV viewer may access to a centralized TV program guide database and program his DVR anywhere.

### SUMMARY OF THE INVENTION

A communication system and methods for remote access to a centralized personal television service are disclosed. According to this invention, a personal TV service center provides centralized program guide information. A user may access the personal TV service center through a digital video recorder which is connected to the personal TV service center via telephone modem or a network server. A user may also access the personal TV service center through a remote computer terminal or a personal digital assistant which is connected to the personal TV service center via a computer network such as the Internet.

In case of local programming, a user selects program events by using a graphical user interface installed in the front panel of the DVR. For remote programming, the user selects program events and programs the DVR by using a similar graphic interface which is incorporated into the Web pages presented to remote users by the personal TV service center's Web server.

To use the personal TV service more efficiently, two or more DVRs may be connected, either by direct connection or over a network such as the Internet, so that recorded media stream may be transferred from one DVR to another.

### BRIEF DESCRIPTION OF THE DRAWINGS

Figure 1 is a block diagram illustrating a communication system for remote access to a centralized personal television service according to the invention;
Figure 2 is a data flow diagram showing the operational processes of the system shown in Figure 1;
Figure 3 is a table diagram illustrating the structures of a user database and an event database shown in Figure 2;
Figure 4 is a flow chart showing a process used by a personal TV service's Web server to obtain remote programming directives from a user;
Figure 5 is a pictorial representation of a graphical user interface for program selection;
Figure 6 is a screen capture of a Now Showing Web page that appears in a user's web browser;
Figure 7 is a block diagram illustrating the interactions among the personal TV service center, the DVR, and the external content server over Internet; and
Figure 8 is a screen capture of a replay bar indicating that the content is downloading faster than playback speed.

### DETAILED DESCRIPTION OF THE INVENTION

In the following detailed description of the invention, some specific details are set forth to provide a thorough understanding of the presently preferred embodiment of the invention. However, it will be apparent to those skilled in the art that the invention may be practiced in embodiments that do not use the specific details set forth herein. Well known methods, procedures, components, and circuitry have not been described in detail.

In the following discussion, in references to the drawings like numerals refer to like parts throughout the several views.

### A. SYSTEM FOR REMOTE ACCESS TO PERSONAL TV SERVICE

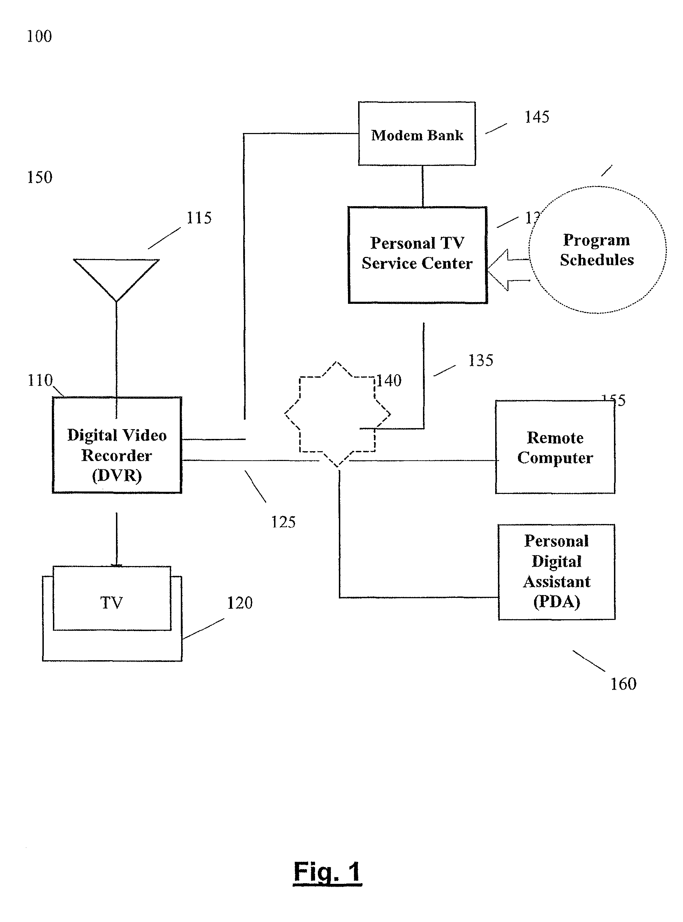

Referring to Figure 1, a communication system for remote access to a personal TV service is shown, generally designated as 100. In accordance with the present invention, a digital video recorder (hereinafter as DVR) 110 installed in a household communicates with a personal TV service center (hereinafter as service center) 130, which provides program guide data, graphical resources (such as fonts, pictures, etc.), service information, and other forms of data that enable the DVR 110 to operate independently of the service center 130 to satisfy viewer interests. This communication uses a secure distribution architecture to transfer data between the DVR 110 and the service center 130 such that both the service data and the user's privacy are protected. The DVR 110 receives broadcast signals from an antenna 115 or receives television signals from a cable TV system.

In one embodiment of the invention, the DVR 110 generally comprises: a plurality of components that are necessary to digitize an analog television signal and convert it into a digital data stream; a plurality of components that are designed to record segments of said data stream; a plurality of storage facilities that are designed to retain segments of said data stream; a plurality of components that are designed to retrieve segments of said data stream, convert the said data stream into an analog signal, and then modulate the signal onto a RF carrier, through which the signal is delivered to a standard TV set 120; and an interface 125, through which the DVR 110 communicates with a network 140.

The DVR 110 may be directly connected to the service center 130 by using its internal telephone modem to dial into an incoming call modem bank 145. The incoming call is first routed to the service center 130 for identification verification. Upon verification, the incoming call is authorized. The private modem bank 145 answers the call and the DVR 110 is granted access to the databases in the service center 130.

Alternatively, the DVR 110 may be indirectly connected to the service center 130 via the network 140. The interface 125 between the DVR 110 and the network 140 may be the internal telephone modem of the DVR 110, or a dedicated network interface such as a cable modem. The computer network 140 can be either a private network or the Internet. The DVR 110 initiates a connection to the computer network 140 by calling a local access telephone number for an Internet service provider (ISP). The ISP directs the network connection request to the service center 130 for identification verification. Upon verification, the network connection is authorized and the DVR 110 is granted access to the databases in the service center 130.

The service center 130 receives program schedule information 150 from external sources. The program schedule information 150 forms the basis of a program guide that TV viewers can use to select TV programs to be recorded. The service center 130 communicates with the computer network 140 through an interface 135.

TV viewers can use remote computer 155 or personal digital assistants 160 to remotely access the program database in the service center 130 by establishing a communication channel with the service center 130 via the computer network 140.

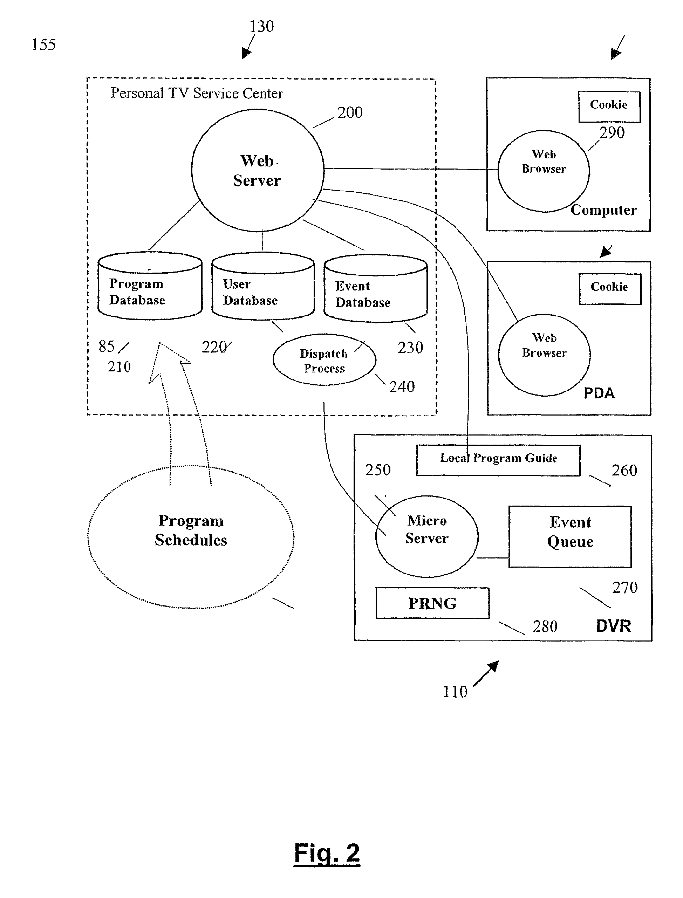

Referring to Figure 2, the service center 130 includes a Web server 200, which collects, organizes, and provides program schedule information; a program database 210, which stores program schedule information; a user database 220, which stores information about users and digital video recorders; an event database 230, which stores an event list for each user, and a dispatch process 240, which traverses the user database and retrieves the event list from the event database. It may also include a network interface over which the Web server and the digital video recorder communicate.

In the preferred embodiment, the DVR 110 includes a micro-server 250, which controls the communication between the DVR 110 and the service center 130; a local program storage guide 260, which records the program guide provided by the service center 130 and is updated whenever the DVR 110 accesses the service center 130; an event queue 270, which is a data structure used to initiate recording sessions that capture selected TV programs; a pseudo-random-number-generator (PRNG) 280, which generates authorization key for remote access; as well as a network interface 125, which connects the DVR 110 to the computer network 140 . The event queue 270 is coupled to a recording device integral to the DVR 110.

Both the remote computer 155 and the personal digital assistants (PDA) 160 comprises a Web browser 290, which may be a generic Web browser that enables the user to view Web pages.

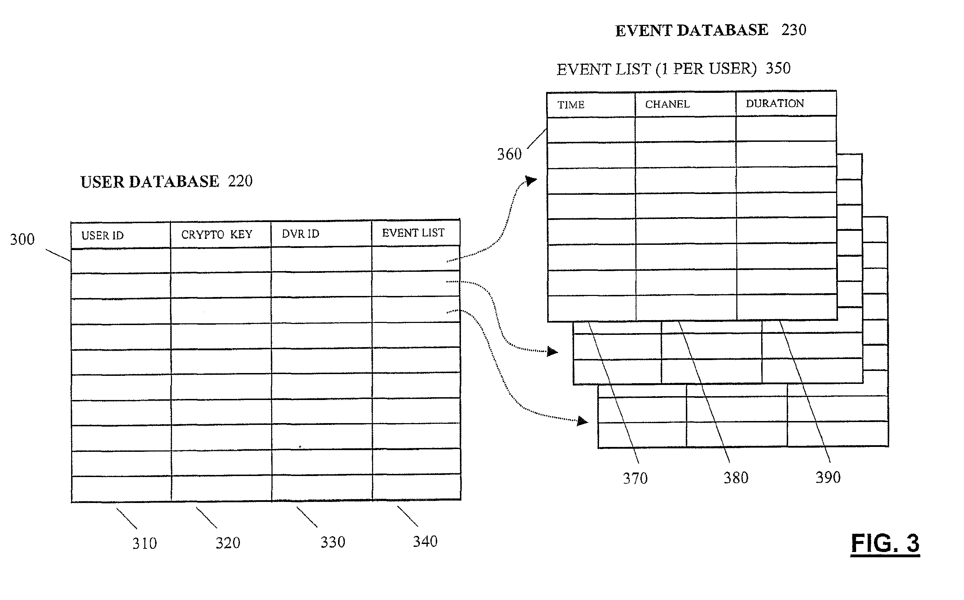

Figure 3 is a table diagram illustrating the structures of a user database 220 and an event database 230. The user database 220 includes a plurality of user records 300. Each user record 300 comprises a plurality of fields, among which are a user identification 310, a crypto-key 320, a DVR identification 330, and an event list pointer 340. The user identification field 310 is used as a key into the user database 220. The crypto-key field 320 is used to store the authorization key received from a user who is attempting to program his DVR 110 remotely. The DVR identification 330 is used to store the network address and connection details which are needed to establish a communication channel with the DVR 110.

In the user database 220, separate event lists 350 are maintained for each user. The event lists 350 are stored in the event database 230. Each event list 350 includes a plurality of event records 360. Each event record includes a plurality of fields among which are a time field 370, a channel field 380, and a duration field 390. The time field 370 is used to indicate a start time for recording and is comprised of the date and time of the program event. The channel field 380 specifies which channel the DVR should record. The duration field 390 is used to specify how long the DVR should record the content for that program event.

### B. PROCESS FOR REMOTE ACCESS TO PERSONAL TV SERVICE

Figure 2, together with Figure 1, shows various processes that collectively enable the functionality of the invention.

The service center 130 receives program schedule information 150 from external sources on a periodic basis. Once the program schedule information 150 arrives, the program database 210 is updated accordingly.

The DVR 110 updates its local program guide 260 on a periodic basis by reading a Web page from the Web server 200. In response to a request from the DVR 110, the Web server 200 first consults the program database 210 for updated program information and then dynamically creates a Web page containing updated program schedule information.

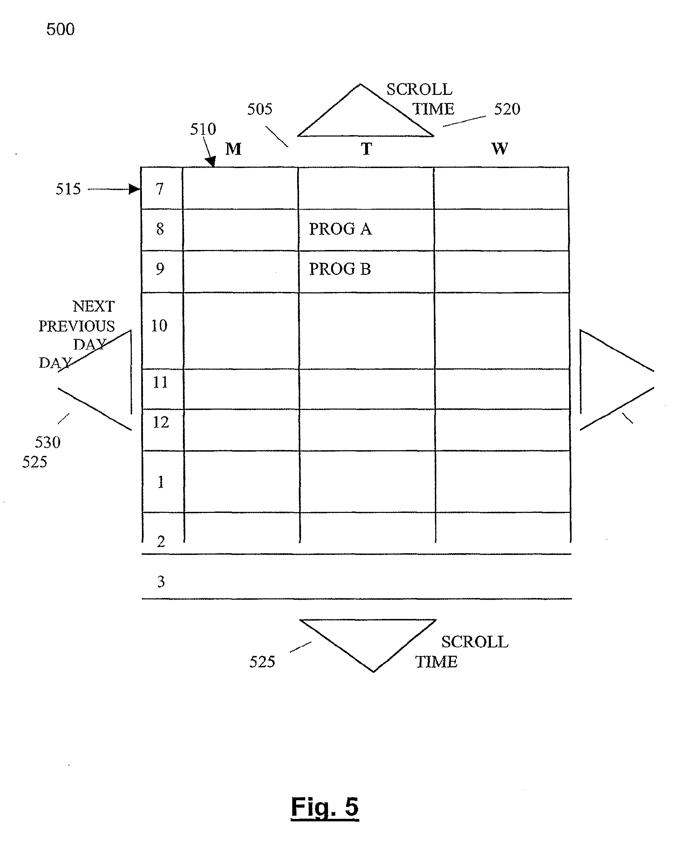

Once the DVR 110 has updated the local program guide 260, the Web server 200 presents to a TV viewer a program guide using a graphical user interface as shown in Figure 5. The TV viewer selects TV programs by program title and time slot to indicate what programs should be recorded by the DVR 110.

The TV viewer can remotely program the DVR 110 by using a Web browser 290 on either a remote computer 155 or a personal digital assistant 160. In this situation, the Web browser 290 is used to access a special Web site hosted by the Web server 200.

To use the remote access feature, a user must first obtain an authorization key from the DVR 110, which is generated by the pseudo-random-number-generator (PRNG) 280. The DVR 110 presents the authorization key to the user on a graphical user interface that is managed by the DVR 110. Whenever remote access is received from the dispatch process 240, the authorization key is stored locally in the DVR 110.

The service center 130 executes a dispatch process 240 on a periodic basis. The dispatch process 240 traverses the user database 220. Whenever the dispatch process 240 encounters a user who has specified program events, the dispatch process 240 retrieves the event list 350 from the event database 230. The dispatch process 240 then establishes a communication channel with the micro-server 250 that resides in the DVR 110. This communication channel is designed to allow the dispatch process 240 to retrieve a special event-dispatch Web page from the micro-server 250. The micro-server 250 presents the event-dispatch Web page to the dispatch process 240. The dispatch process 240 then completes the event-dispatch Web page and submits it back to the micro-server 250.

The micro-server 250 uses event directives found in the event-dispatch Web page to update the event queue 270 integral to the DVR 110. The event queue 270 is a data structure used by the DVR 110 to initiate recording sessions that capture TV program events.

In order to authenticate a transaction, the Web server 200 includes one or more authorization codes for the user affiliated with the DVR 110 to be programmed. The DVR 110 compares the authorization code against a private copy maintained in the DVR's non-volatile memory. The authorization codes are time sensitive and can be set to expire as system security requirements dictate.

### C. PROCESS TO OBTAIN REMOTE PROGRAMMING DIRECTIVES

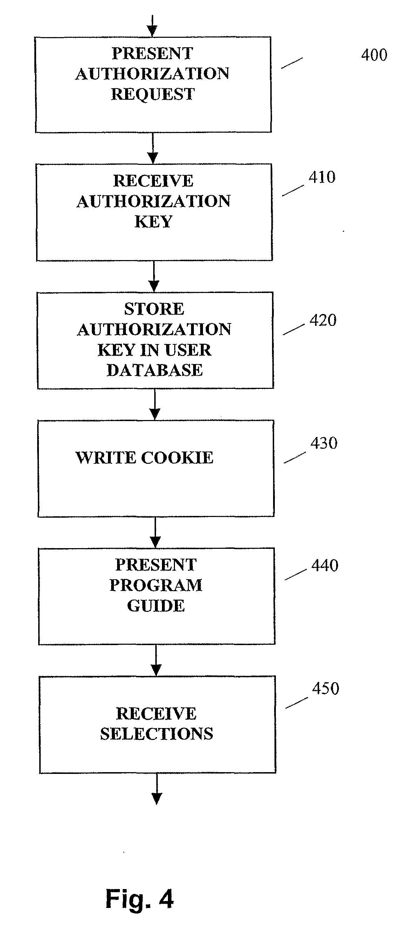

Figure 4 is a flow chart showing a process used by the Web server 200 to obtain remote programming directives from a user. The process includes the steps of:
Step 400: The Web server 200 presents an authorization request form in the first Web page to the user who accesses a special Web site that is managed by the Web server 200;
Step 410: The Web server 200 receives the authorization key that is entered by the user who responds to the authorization request and uses the authorization key to authenticate any subsequent programming commands transmitted to the user's DVR 110;
Step 420: The Web server 200 stores the authorization key together with a user identification in the user database 220;
Step 430: Once the Web server 200 has stored the authorization key in the user database 220, it writes a cookie in the non-volatile memory of the remote computer 155 or personal digital assistant 160;
Step 440: The Web server 200 presents a program guide to the user after the user is identified and authenticated;
Step 450: The Web server 200 receives the user selections and creates an event list 350 specific to the user. The event list 350 is stored in the event database 230.

In Step 440, the Web server 200 follows a script integral to the first Web site presented to the user and searches for a valid cookie on the remote computer 155 or the personal digital assistant 160. Once a valid cookie is discovered, steps 400 through 430 are excluded from the process flow.

### D. GRAPHICAL USER INTERFACE FOR PROGRAM SELECTION

Figure 5 is a pictorial representation of an exemplary graphical user interface (GUI) 500 for program selection. The GUI 500 is used both on the DVR front panel and is incorporated into the Web pages presented to remote users by the Web server 200. When implemented directly in the DVR 110, the GUI 500 is manipulated directly by the control process integral to the DVR 110. When the GUI 500 is presented to the remote users via a computer network, it embodies as an active server Web page. Figure 6 is a screen capture of the Now Showing Web page that appears in a user's web browser.

The GUI 500 comprises a table 505 that contains a plurality of columns 510 and a plurality of rows 515. The columns 510 correspond to the days of the week (and a specific calendar date). The rows 515 correspond to the hours of a given day. The columns 510 and rows 515 of the table 505 are actually made up of data selection controls where the caption of the control is set to indicate the title of a TV program that is scheduled in the time slot according to the position of that control in the table 505. The GUI also comprises a mechanism for scrolling up 520 and scrolling down 525, a mechanism for turning forward 530 and turning backward 535; a mechanism for selecting a specific TV program; a mechanism for creating a program event list 350 which contains selected TV programs; and a mechanism for editing said event list 350. In addition, it may also include a mechanism for commanding download, a mechanism for indicating the download is in progress, and a mechanism for canceling the ongoing download.

The position of the control corresponds to the day and hour of the TV program event. The user can toggle the selection controls that are presented in the GUI 500. When the GUI 500 is returned to the Web server 200, the identifiers of the selected controls are used in conjunction with the program guide 260 to create an event list 350 for the user. The event list 350 is then stored in the event database 230 in the case of remote programming. For local programming of the DVR 110, the event list 350 is stored directly in the event queue 270 that controls the DVR recording sequence.

### E. INTERNET ACCESS TO DIGITAL VIDEO RECORDER

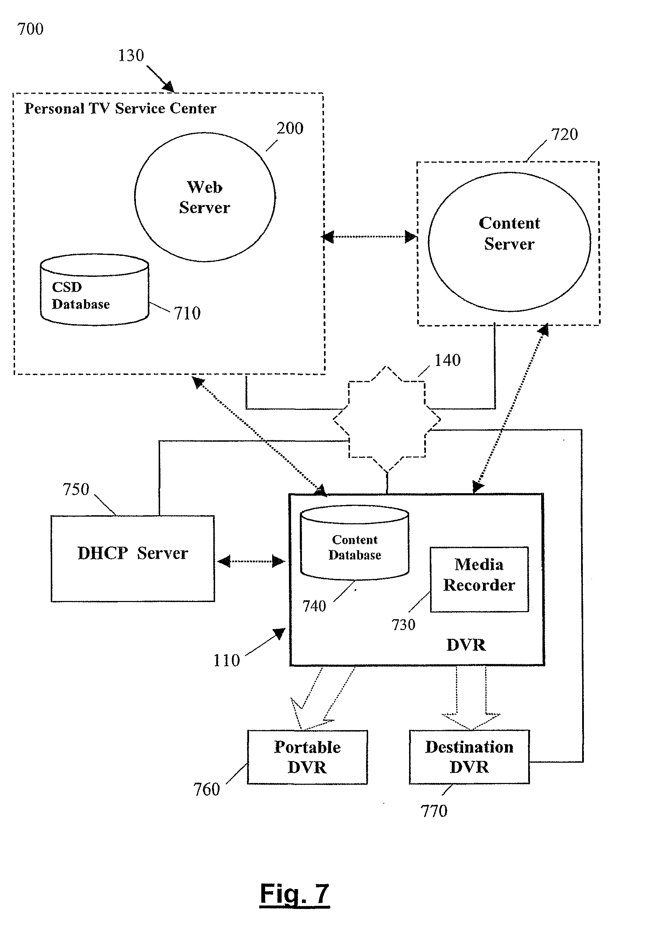

Figure 7 is a block diagram of a general scheme 700 illustrating the interactions among the service center 130, the DVR 110, and the external content server 720 over the Internet, wherein a particular style of the Internet access is integrated into the DVR 110 to enable it to fetch certain types of content over an Internet connection 140 and make them available for viewing in the Now Showing page as shown in Figure 6.

A listing of the content name, i.e., the title of TV program, indicates that such content is being fetched on the GUI 500, and a record icon, or some variant thereof, indicates that the download is in progress. The viewer may pick the content (i.e., the TV program) and play it at any time.

The download may occur at any speed, i.e., the interface 125 in Figure 1 is not dependent in any way on speed of download. Figure 8 is a screen capture of the Web page showing a replay bar that, by growing the green region to match, indicates that the content is downloading faster than playback speed. In any case, the viewer is able to use all trick-play actions on whatever amount of content has been downloaded to that point.

The fact that the content was downloaded over the Internet is totally transparent to the viewer, except in the context of presenting program information, where an indication that the content is from the Internet may be made in various ways.

Pointers to downloaded content are stored in a local content database 740 on the DPR 110 hard drive in an analogous manner to how broadcast programs are stored, such that all forms of searching and presentation properly display those programs and provide for their manipulation.

In channel or network oriented contexts, downloadable programs are presented in a manner analogous to broadcast programming. These contexts may have to be modified such that the channel or network "lineup" is presented in a sensible manner, since time and location are irrelevant for such programs.

The number of content items available in the Now Showing context as shown in Figure 6 may make navigation unwieldy. Although not required for the initial implementation, this context may be modified to make navigation of many items simpler.

The entity providing the content from some servers may be viewed as a television network. Each unique server name indicates a channel. Here, a "server" is just a name on the network; it might map into just about any physical server anywhere in the world.

Once the content server 720 is contacted, the DVR 110 requests the media content according to the program identification given. This is mapped by the Web server 200 into a particular piece of content, which is then sent down the connection. Either end may throttle the download speed.

If the viewer requests multiple downloads, the DVR 110 may choose several different ways to get the content; it may initiate multiple connections with a maximum limitation, or queue requests, or both.

A primary focus is security of the DVR 110. Opening up a network port leads to a large number of possible security breaches, revolving around the security of copyrighted content and protection of a customer's private data.

A standard Linux firewall support is used to manage this protection by automatically blocking access to all but a single, well-known port in both directions. This single, well-known port is used by the application software to contact the external content server 720 for downloading media content. No connections to this port from the outside world is accepted.

A Linux DHCP client in the DVR 110 shall be ported. On boot up, if a network interface is detected, then the DHCP client uses the well-known port to poll for an external DHCP server 750. If no server is found, networking will be disabled. Otherwise, the DVR 110 will initialize its network parameters from the DHCP response.

The disadvantage of this Linux firewall support is that the external DHCP server 750 is required to configure the Internet access information. This raises the possibility of aliasing. To defeat attacks of this nature, all communication with the content server 720 must be both authenticated and encrypted. The content server 720 must have access to the public key of the DVR 110, and the DVR must have a copy of the public key of the content server 720. Using a certificate exchange, the DVR 110 and the content server 720 generate a one-time session key for the Blowfish protocol, and all further communication are encrypted. The public key of the content server 720 is distributed from the service center 130, which has also provided appropriate program guide references to the content server 720.

The service center 130 accepts descriptions of the content server 720 consisting of server URLs, content descriptions, content identifications, "channel" descriptions, "network" descriptions, etc. These data are imported into a content servers description (CSD) database 710 and sliced out as appropriate. A set of public keys for access to the content server 720 are also provided.

In order for the content server 720 to accept a connection from the DVR 110, it must have access to the public key for a particular DVR. This key distribution is performed on-the-fly. Each content server uses an authenticated connection to the service center 130 to perform key lookup. Given a DVR serial number, the service center 130 returns its public key. The content server 720 may cache this public key if so desired. The service center 130 maintains a log of all distributed public keys.

The service center 130 may refuse to provide the public key of an inactive DVR. Additionally, the content server 720 is required to respond to key invalidation requests from the service center 130, for instance, if a particular DVR becomes inactive.

A media recorder 730 is a subsystem of the personal TV service application. It allows for simultaneous record and playback of the downloading content. The recorded content is stored in the content database 740. The media recorder 730 will not be started if no permanent network connection is available. There are a number of different threads within this subsystem.
(1) Recording Queue Thread: This thread manages the queue of network download requests and implements the download policy. Initially, this may be a simple FIFO queue maintained in the object store. A recording queue policy object is maintained once the download policy is implemented.
(2) Fetch Recording Thread: This thread is responsible for managing a connection with the content server 720. It contacts the server, implements the authentication protocol, requests the desired content, and manages its download.

As a variation on this strategy, the program object may indicate multiple servers to be polled for the media content. The servers are polled in order; the first to accept a request for download is used. This provides for load-balancing.

The thread periodically checkpoints its state to the object store. This allows restart of a download after a power failure or system error. The thread also manages the state of database objects that are used for presentation and navigation of the content being downloaded; for example, it manages the state of the recording object for proper display in the Now Showing context as shown in Figure 6. There may be one or more such threads active at any point in time.

### F. DVR TO DVR INTERACTIONS

A mechanism for transferring media and database elements between two DVRs is developed. Referring to Figure 7, one example of the transfer is that a smaller amount of disk storage in a battery-driven device is provided in a portable DVR 760. Before going on vacation, a user may transfer desirable media and the invisible associated service data to the portable DVR 760 and take the portable DVR 760 along such that the media may be used when desired. Another example of the transfer is that two DVRs 110 and 770 are slaved together such that two media streams are played with precise synchronization to achieve identical operation.

There are many ways to connect two DVRs. The simplest one is to plug the output of the source DVR 110 into the input of the destination DVR 770. While it is functional, this method fails to transfer information about the media stream, which is essential to viewer satisfaction in managing and using the media stream.

The media stream stored in the DVR 110 consists of two pieces: the media content itself, and a database object which gives descriptive information about the media content. If a data transfer method is used, such as a network (e.g., IEEE 802.3) or a direct connection (e.g., IEEE 1394), then both the media content and the descriptive information can be transferred, such that the integrity of the viewer experience is preserved.

Content owners are concerned about theft of content. A further refinement of this method is to encrypt the data transfer between the DVRs 110 and 770. This can be done in a number of standard and custom ways. For instance, the Diffie-Heliman secure connection protocol may be used to encrypt the transfer using a one-time key.

If it is desirable to allow the transfer to only occur to certain specified DVRs, the integrated security system may be used. The public key of each DVR must be known to the other. When the transfer is started, the DVRs exchange signed, encrypted certificates based on the stored private key. If both DVRs can decrypt and verify the signature of the other, a one-time session key is then used to encrypt the data during the transfer.

Key distribution in such a case may be handled through the service center 130. A viewer may contact the service center 130, and request that two DVRs 110 and 770 he owns be authorized for data transfer between each other. The service center 130 sends an authorization object containing each DVR's public key to the other DVR through an appropriate download mechanism. The service center 130 maintains a record of this operation for later auditing purposes, which includes identifying information for each DVR. For instance, should the security system be defeated in one DVR and the public key of the other be exposed, it is possible to modify other DVRs such that they appear authorized to the source DVR 110. Each DVR keeps a record of the transfers. This record is uploaded to the service center 130. Later, this information could be processed to look for copy protection violations, copies to unauthorized DVRs, etc.

If the transfer is interrupted, the destination DVR 770 marks the media stream as "partial" in the descriptive object. Later, the transfer may be restarted. Since the design of the database system guarantees the media stream can be uniquely identified on the destination DVR 770, the partial stream is found, and the transfer begins from its end, thus avoiding re-transfer of media that has already been stored. Once the entire media stream is stored, the descriptive object is updated to show a complete media stream.

There is no particular real-time requirement necessary when transferring digital data between the DVRs. The transfer may take place at whatever speed is appropriate. For instance, it may be the case that the network between the DVRs is slow, in which case the transfer duration will be longer than the playback duration of the content. Alternatively, the network may be fast, in which case multiple media streams might be transferred in much less time than taken for playback of one content item. The viewer on the destination DVR may start viewing the media stream as soon as the first portions are available, in parallel with the ongoing download of the stream.

There is no requirement that the source or destination DVR be a complete digital video DVR. For instance, the media streams stored on a server in a cable head end may be transferred reliably to the destination DVR 770. Alternatively, the media stream stored in the source DVR 110 may be transferred to a head-end server.

Certain media distribution architectures, such as digital satellite systems, broadcast most media content in an encrypted state. Using a local decryption facility based on a smart-card, the media content is decrypted only if it is viewed, thus protecting the content from theft. It is possible for the DVR to save these encrypted media streams to disk, and to initiate decryption upon playback. This method may be used to transfer media streams between two DVRs. In order to properly comply a particular set of content protection rules associated with the media stream (such as play once, expire after one day, etc.), the DVR maintains with the database object describing the media stream the copy protection information associated with the media stream (including whether the stream is stored encrypted).

The content protection rules associated with the media stream may be transferred to the destination DVR 770 as well. For example, the DVR 110 may have stored a movie from the content server 720 that will not be decrypted until it is viewed. If the viewer wishes to have this media stream transferred, it is simply copied into the media region of the destination DVR 770, and the descriptive object is transferred as well. This means that the original information on the media stream is faithfully duplicated to the destination DVR 770.

The smart-card might be pulled from the source DVR 110 and installed in the destination DVR 770. When the media content is viewed, the viewer is properly charged and all copy protection rules followed. The original media content and descriptive information might, or might not, be removed. For instance, in a "view-once" scheme, the originals are destroyed, whereas in a "charge-per-view" scheme, they would not.

Using the same techniques as described above, a secure, or authenticated and secure, connection may be established between two or more DVRs using a network, perhaps accessed using the internal modem. This enables control interactions to take place. Some examples are:
(1) Synchronized playback. A viewer may control trick-play features on a particular media stream. Each key event is also passed to the destination DVR 770, which automatically performs the same action. For example, a presenter may give a live presentation using the source DVR 110 as a multimedia playback device, and an audience at a remote location can watch the same presentation given in the same way at the same time. Alternatively, two viewers communicating through some other means, such as a telephone, may interact, while one or the other controls the playback on both DVRs of the same program. This allows precise discussion of the program of interest. The means of communication may be a simple chat program overlayed on the display in which the participants type comments.
(2) Link passing. A viewer of the source DVR 110 may indicate that a particular program be linked to the destination DVR 770. This results in a message sent to the destination DVR 770 which causes it to schedule recording of that program. Alternately, the program may be unlinked as well. The message needs to contain only the program identification, assuming both DVRs 110 and 770 are in service.
(3) Sound or graphics effects. When the viewer takes an action, such as pressing a particular key sequence, the source DVR 110 may play a sound or present a graphic. It may pass that event to the destination DVR 770 which reproduces that same sound or graphic. For instance, a child may add sounds to a program this way, which may be replicated for his friend on a remote destination DVR 770. Clearly, such communication may be multi-way.

It may be useful for DVRs to be able to transfer other types of data as well. For example, consider a large home DVR 110 and a smaller portable DVR 760. Interesting data, such as software, graphical elements, program guide data, etc., might be transferred between two DVRs as well. For instance, the portable DVR 760 may be updated by the home DVR 110 every time the two DVRs are connected. This update includes transferring and installing a software update as well. The portable DVR 760 transfers any operational information to the home DVR 110 whenever two DVRs are connected, and the home DVR 110 then sends the operational information to the service center 130 whenever the home DVR 110 accesses to the service center 130.

The update may be done automatically. In such a case, when two DVRs are connected, a set of pre-configured actions takes place, such as updating program guide or software, and then media streams may be transferred as well. If the destination DVR 770 is a smaller portable unit, then not all media streams would fit. In this case, the viewer may explicitly choose which media streams to transfer. A more interesting case occurs if preference information is used to choose a subset of the available media of most interest to the viewer and transfer only those streams. Another case is where media streams are transferred going from newest to oldest, stopping when no more will fit, or oldest to newest, which is less interesting. Another criteria may be whether the program was explicitly picked or chosen based on viewer preferences. Any program information stored in the descriptive object for the content may be used in the selection criteria, such as length, actors, rating, etc.

Although the invention is described herein with reference to the preferred embodiment, one skilled in the art will readily appreciate that other applications may be substituted for those set forth herein without departing from the spirit and scope of the present invention.

Some aspects of embodiments of the invention are defined in the listing of enumerated example embodiments on the following pages 20-37 of the description.

Accordingly, the invention should only be limited by the Claims included below, i.e., after the enumerated example embodiments.

Enumercled example embodiments
1. A communication system for remote access to centralized personal TV service, said communication system comprising:
   a personal TV service center, which provides a program guide;
   a plurality of digital video recorders, each coupled to a monitor;
   a signal input device, from which a digital video recorder receives TV programs;
   a computer network coupled to said personal TV service center and said digital video recorders; and
   a plurality of remote terminals coupled to said computer network;
   wherein a digital video recorder communicates with said personal TV service center periodically to get an updated program guide;
   wherein a secure distribution architecture is used in said communication between said digital video recorder and said personal TV service center such that both service data and a user's privacy are protected;
   wherein said digital video recorder may be programmed to record TV programs that are selected according to said program guide provided by said personal TV service center; and
   wherein said digital video recorder may play back recorded TV programs independently of said personal TV service center to satisfy the user's interest.
2. The communication system of enumerated example embodiment 1, wherein said personal TV service center comprises:
   a Web server that provides program schedule information;
   a program database that stores program schedule information;
   a user database that stores information about users and digital video recorders;
   an event database that stores an event list for each user;
   a dispatch process that traverses said user database and retrieves said event list from said event database; and
   a network interface, over which said Web server and said digital video recorder communicate.
3. The communication system of enumerated example embodiment 2, wherein said user database includes a plurality of user records; and
   wherein each of said user records comprises:
   a user identification field, which is used as an authorization key into said user database;
   a crypto-key field, which is used to store said authorization key received from the user who is attempting to program a digital video recorder remotely;
   a digital video recorder identification field, which is used to store said computer network's address and connection details that are needed to establish a communication channel with the user's digital video recorder; and
   an event list pointer field;
   wherein said user database maintains a separate event list for each user.
4. The communication system of enumerated example embodiment 2, wherein said event database stores all event lists;
   wherein each event list includes a plurality of event records; and
   wherein each said event record comprises:
   a time field, which is used to indicate a start time for recording and a date and time of a program event;
   a channel field, which specifies which channel said digital video recorder should record; and
   a duration field, which is used to specify how long said digital video recorder should record the content for said program event.
5. The communication system of enumerated example embodiment 2, wherein said personal TV service center receives program schedule information from external sources;
   wherein said program schedule information forms the basis of said program guide that a user can use to select TV program events to be recorded; and
   wherein the user can use said remote terminal to remotely access said program guide in said service personal TV service center by establishing a communication channel with said personal TV service center via said computer network.
6. A digital video recorder used in a communication system for remote access to a centralized personal TV service, comprising:
   a plurality of components that are necessary to digitize a television analog signal and convert it into a digital data stream;
   a plurality of components that are designed to record segments of said digital data stream;
   a plurality of storage facilities that are designed to retain segments of said digital data stream;
   a plurality of components that are designed to retrieve segments of said digital data stream, convert said digital data stream into an analog signal, and then modulate said analog signal onto a RF carrier, through which said analog signal is then delivered to a said monitor; and
   a network interface, over which said digital video recorder and said computer network communicate.
7. The communication system of enumerated example embodiment 6, wherein said network interface comprises a modem device, and wherein said digital video recorder uses said modem device to initiate a connection to said computer network.
8. The communication system of enumerated example embodiment 7, wherein said modem device is a telephone modem, and wherein said digital video recorder uses said telephone modem to initiate a connection to said computer network.
9. The communication system of enumerated example embodiment 7, wherein said modem device is a cable modem, and wherein said digital video recorder uses said cable modem to initiate a connection to said computer network.
10. A digital video recorder used in a communication system for remote access to a centralized personal TV service, comprising:
   a local program guide, which records the program guide provided by said personal TV service center and is updated whenever said digital video recorder accesses said personal TV service center;
   a micro-server, which controls said communication between said digital video recorder and said personal TV service center;
   an event queue, which is a data structure used to initiate recording sessions that capture selected TV programs;
   a media recorder, which records selected TV programs;
   a pseudo-random-number-generator, which generates authorization key for remote access; and
   a network interface, which connects said digital video recorder to said computer network coupled to said personal TV service center.
11. The communication system of enumerated example embodiment 1, further comprising a private modem bank which is connected to said personal TV service center, wherein said digital video recorder communicates with said personal TV service center by using its internal modem device to connect said private modem bank.
12. The communication system of enumerated example embodiment 1, wherein said computer network may be either a private network or the Internet.
13. The communication system of enumerated example embodiment 1, wherein said remote terminal may be a personal computer or a personal digital assistant or any other kind of Web-enabled apparatus capable of sending and receiving information via said computer network.
14. The communication system of enumerated example embodiment 13, wherein said remote terminal comprises a Web browser that enables a user to view Web pages.
15. A process for remote access to a centralized personal television service, comprising the steps of:
   receiving, by said Web server, program schedule information from external sources on a periodic basis, wherein once said program schedule information arrives, said program database is updated accordingly;
   updating, by said digital video recorder, said local program guide on a periodic basis, wherein said Web server, in response to a request from said digital video recorder, first consults said program database for updated program information and then dynamically creates a Web page containing updated program information; and
   presenting, by said Web server, to a remote user a program guide by using a graphical user interface, wherein the user selects program events by program title and time slot to indicate what programs should be recorded by said digital video recorder.
16. The process of enumerated example embodiment 15, wherein the user can remotely program said digital video recorder by using said Web browser on said remote terminal, wherein said Web browser is used to access a special Web site that is hosted by said Web server.
17. The process of enumerated example embodiment 15 and further comprising the steps of:
   obtaining, by the user, an authorization key from said digital video recorder, wherein said authorization key is generated by said pseudo-random-number-generator that is integral to said digital video recorder;
   presenting, by said digital video recorder, said authorization key to the user via a graphical user interface which is managed by said digital video recorder; and
   storing said authorization key locally in said digital video recorder whenever remote access is received from said dispatch process residing in said personal TV service center.
18. The process of enumerated example embodiment 15 and further comprising the steps of:
   executing, by said personal TV service center, said dispatch process on a periodic basis, wherein said dispatch process traverses said user database;
   retrieving, by said dispatch process, an event list from said event database whenever said dispatch process encounters a user who has specified program events;
   establishing, by said dispatch process, a communication channel with said micro-server residing in said digital video recorder whenever said dispatch process encounters a user who has specified program events, wherein said communication channel is designed to allow said dispatch process to retrieve an event-dispatch Web page from said micro-server residing in said digital video recorder;
   presenting, by said micro-server residing in said digital video recorder, said event-dispatch Web page to said dispatch process; and
   completing, by said dispatch process, said event-dispatch Web page and sending it back to said micro-server residing in said digital video recorder.
19. The process of enumerated example embodiment 15 and further comprising the step of:
   using, by said micro-server residing in said digital video recorder, event directives found in said event-dispatch Web page to update said event queue integral to said digital video recorder;
   wherein said event queue is a data structure used by said digital video recorder to initiate recording sessions that capture TV program events.
20. The process of enumerated example embodiment 15, wherein said Web server includes one or more authorization codes for the user who is affiliated with said digital video recorder to be programmed, wherein said digital video recorder compares said authorization codes against a private copy that is maintained in said digital video recorder's non-volatile memory; and
   wherein said authorization codes are time sensitive and can be set to expire as system security requirements dictate.
21. A process for a Web server to obtain remote programming directives from a user, comprising the steps of:
   presenting first Web page to the user when the user accesses said special Web site, wherein said first Web page is an authorization request form;
   receiving said authorization key entered by the user, wherein said Web server uses said authorization key to authenticate any subsequent programming commands transmitted to said digital video recorder;
   storing said authorization key together with a user identification in said user database;
   writing a cookie in said remote terminal's non-volatile memory; and
   providing a program guide to the user when the user is authenticated by said Web server,
   wherein said Web server follows a script which is integral to the first Web site presented to the user and searches for a valid cookie on said remote terminal; and
   wherein, if a valid cookie is discovered, the steps of presenting first Web page through writing a cookie are excluded from this process flow;
   receiving the user's selections and creating a program event list specific to the user;
   wherein said event list is stored in said event database.
22. A graphical user interface for program selection for interaction between a user and said personal TV service center, said graphical user interface comprising:
   means for displaying TV program information which is organized in time slots;
   means for scrolling up and down;
   means for scrolling forward and backward;
   means for selecting a specific TV program;
   means for creating an event list which contains selected TV programs; and
   means for editing said event list.
23. The graphical user interface of enumerated example embodiment 22, wherein said means for displaying TV program information is a table, said table comprising:
   a plurality of columns that correspond to the days of a week; and
   a plurality of rows that correspond to the hours of a given day;
   wherein said columns and rows are actually made up of data selection controls; and
   wherein the caption of said data selection control is set to indicate the title of a TV program that is scheduled in the time slot according to the position of that data selection control in said table.
24. The graphical user interface of enumerated example embodiment 22, when it is used on the front panel of a digital video recorder, is manipulated directly by a control process integral to said digital video recorder.
25. The graphical user interface of enumerated example embodiment 22, wherein said event list is stored directly in said event queue that controls the recording sequence of said digital video recorder.
26. The graphical user interface of enumerated example embodiment 22 is embodied as an active Web page that is presented to a remote user by a Web server.
27. The graphical user interface of enumerated example embodiment 22, wherein said event list is stored in said event database that controls the recording sequence of said digital video recorder over said network.
28. A digital video recorder used in a communication system for remote access to a centralized personal TV service, comprising:
   means for digitizing a television analog signal and converting it into a digital data stream;
   means for recording segments of said digital data stream;
   storage means for retaining segments of said digital data stream;
   means for retrieving segments of said digital data stream;
   means for converting said digital data stream into an analog signal;
   means for modulating said analog signal onto a RF carrier, through which said analog signal is then delivered to a said monitor; and
   the Internet access means for downloading media streams over the Internet;
   wherein said media streams includes content itself and associated service data;
   wherein said associated service data comprises a database object and other forms of data that enable said digital video recorder to operate independently of said personal TV service center; and
   wherein said database object provides descriptive information about said content.
29. The digital video recorder of enumerated example embodiment 28, wherein said storage means comprises means for storing pointers to downloaded content, by which said downloaded content is stored in a manner analogous to that the broadcast programs is stored.
30. The digital video recorder of enumerated example embodiment 28, wherein said downloaded content is presented in a manner analogous to that the broadcast programs is presented.
31. The digital video recorder of enumerated example embodiment 28, wherein said digital video recorder requests said content according to a given program identification;
   wherein said program identification is mapped by said Web server into a particular piece of content; and
   wherein said digital video recorder chooses several different ways to get content for multiple download requests.
32. The digital video recorder of enumerated example embodiment 28 and further comprising:
   means for commanding the download;
   means for indicating that the download is in progress; and
   means for canceling the ongoing download.
33. The graphical user interface of enumerated example embodiment 22, which is incorporated into the Web pages presented to a remote user by said Web server, further comprising:
   means for commanding the download;
   means for indicating that the download is in progress; and
   means for canceling the ongoing download.
34. A method for data security protection of a personal TV service system over the Internet, the method comprising:
   using a standard Linux firewall to keep a single port open to access a content server for downloading content and have all other ports automatically blocked in both directions; and
   using a DHCP server to configure the Internet access information;
   wherein said content server's descriptive information, including server URLs, content descriptions, content identifications, channel descriptions, and network descriptions, is stored in a database incorporated in said personal TV service center.
35. The method of enumerated example embodiment 34, wherein a Linux DHCP client in said digital video recorder is ported to detect a network interface at boot up, further comprising:
   using, by said Linux DHCP client, a well-known port to poll for said DHCP server, if said network interface is detected;
   initializing, by said digital video recorder, network parameters from the DHCP response, if said DHCP server is found; and
   disabling networking, if no DHCP server is found.
36. The method of enumerated example embodiment 34 and further comprising:
   authenticating all communication between said content server and a digital video recorder upon validation of said digital video recorder's public key;
   wherein said digital video recorder's public key is distributed by said personal TV service center on the fly;
   wherein said content server has access to said digital video recorder's public key; and
   wherein said digital video recorder has a copy of said content server's public key which is distributed from said personal TV service center.
37. The method of enumerated example embodiment 36, wherein said content server caches said digital video recorder's public key.
38. The method of enumerated example embodiment 36, wherein said content server and said digital video recorder generate a one-time session key for a Blowfish protocol.
39. The method of enumerated example embodiment 38 and further comprising:
   encrypting all communication between said content server and said digital video recorder using said Blowfish protocol.
40. The method of enumerated example embodiment 36, wherein said validation of said digital video recorder's public key comprises the sub-steps of:
   sending said digital video recorder's serial number to said personal TV service center;
   looking up a public key in correspondence to said serial number in said user database;
   returning this public key to said content server;
   comparing this public key with said public key stored in said content server;
   wherein said digital video recorder's public key is validated if these two public keys match; and
   wherein said personal TV service center refuses to provide the public key if a digital video recorder is inactive.
41. The method of enumerated example embodiment 36, wherein said content server is required to respond to key invalidation requests from said personal TV service center and update its public key records accordingly.
42. A media recorder, which allows for simultaneous record and playback of downloading content, comprising:
   a recording queue thread which manages the queue of network download requests and implements the download policy; and
   a fetch recording thread which manages the connection with a content server;
   wherein said recording queue thread is maintained in an object store; and
   wherein said fetch thread contacts said content server, implements an authentication protocol, requests desired content, and manages the download.
43. The media recorder of enumerated example embodiment 42, wherein multiple content servers may be polled in order for the content, and wherein the first content server that accepts a request for a download is used.
44. The media recorder of enumerated example embodiment 42, wherein said fetch thread periodically checkpoints its state to said object store in order to restart the download if the download is interrupted.
45. The media recorder of enumerated example embodiment 42, wherein said fetch thread manages the state of database objects that are used for presentation and navigation of the content being downloaded.
46. A method for using personal TV service by transferring data from a home digital video recorder to a portable digital video recorder, comprising:
   transferring media stream from said home digital video recorder to said portable digital video recorder; and
   operating said portable digital video recorder any where;
   wherein said media stream is stored in a disk of a battery driven device in said portable digital video recorder;
   wherein said media stream comprises content itself and associated service data;
   wherein said associated service data comprises a database object and other forms of data that enable said portable digital video recorder to operate independently of said personal TV service center; and
   wherein said database object provides descriptive information about said content.
47. The method of enumerated example embodiment 46, wherein said media stream in said portable digital video recorder is automatically updated by said home digital video recorder whenever these two digital video recorders are connected.
48. The method of enumerated example embodiment 46, wherein the software in said portable digital video recorder is automatically updated by said home digital video recorder whenever these two digital video recorders are connected.
49. The method of enumerated example embodiment 46, wherein said portable digital video recorder transfers any operational information to said home digital video recorder whenever these two digital video recorders are connected; and
   wherein said home digital video recorder transfers said operational information to said personal TV service center whenever said home digital video recorder accesses said personal TV service center.
50. A method for using personal TV service by transferring data between two digital video recorders which are in service, comprising:
   transferring media stream from a source digital video recorder to a destination digital video recorder; and
   operating said destination digital video recorder to play back recorded content;
   wherein said media stream comprises content itself and associated service data;
   wherein said associated service data comprises a database object and other forms of data that enable said destination digital video recorder to operate independently of said personal TV service center;
   wherein said database object provides descriptive information about said media content; and
   wherein said source digital video recorder and said destination digital video recorder communicate via direct connection or via a network.
51. The method of enumerated example embodiment 50 and further comprising:
   encrypting the data transfer between said source digital video recorder and said destination digital video recorder to assure data security; and
   decrypting said recorded content only if it is played back;
   wherein a local decryption facility based on a smart-card is used.
52. The method of enumerated example embodiment 51, wherein a Diffie-Heliman connection protocol is used to encrypt said data transfer using a one-time key.
53. The method of enumerated example embodiment 51, wherein said smart card may be pulled from said source digital video recorder and installed in said destination digital video recorder; and
   wherein when said content is viewed in said destination digital video recorder, all content protection rules associated with said content are complied and the owner of said destination digital video recorder is properly charged.
54. The method of enumerated example embodiment 50, wherein said media stream stored in said destination digital video recorder is removed after said content is reviewed in a view once scheme.
55. The method of enumerated example embodiment 50, wherein said destination digital video recorder retains said media stream in said content database in a charge per view scheme.
56. The method of enumerated example embodiment 50, further comprising:
   marking, by said destination digital video recorder, said media stream as partial in said database object when the data transfer is interrupted, in order to avoid re-transfer of the already stored partial media stream when the data transfer is resumed.
57. The method of enumerated example embodiment 56, wherein said database object is updated to show a complete media stream when the entire media stream is stored in said destination digital video recorder.
58. The method of enumerated example embodiment 50, wherein the speed of transferring media stream from said source digital video recorder to said destination digital video recorder may be different from the speed of playing back recorded content; and
   wherein said destination digital video recorder may start to play back as soon as the first portion of said content is available, in parallel with the ongoing media stream transfer.
59. The method of enumerated example embodiment 50, wherein software, graphical elements and program guide may be transferred from said source digital video recorder to said destination digital video recorder.
60. The method of enumerated example embodiment 59, wherein whenever said source digital video recorder and said destination digital video recorder are connected, a set of pre-configured actions take place automatically.
61. The method of enumerated example embodiment 50, wherein said content to be transferred from said source digital video recorder to said destination digital video recorder may be selected by the user of said source digital video recorder based on said descriptive information about said content stored in said database object.
62. The method of enumerated example embodiment 50, wherein said source digital video recorder and said destination digital video recorder may be operated with precise synchronization.
63. The method of enumerated example embodiment 62, wherein a viewer may control trick-play features on a particular media stream;
   wherein each key event is passed to said destination digital video recorder; and
   wherein said destination digital video recorder performs the same action.
64. The method of enumerated example embodiment 50, wherein the user of said source digital video recorder may indicate a particular program be linked to said destination digital video recorder so that said destination digital video recorder schedules recording of said program according to the user's indication.
65. The method of enumerated example embodiment 50, wherein when the user of said source digital video recorder presents a sound or a graphic in said source digital video recorder, said sound or graphic may be passed to said destination digital video recorder such that said destination digital video recorder displays the same sound or graphic.
66. The method of enumerated example embodiment 50, wherein said source digital video recorder may be a server in a cable head end.
67. The method of enumerated example embodiment 50, wherein said destination digital video recorder may be a server in a cable head end.
68. A method for data security used in transferring data between two digital video recorders, comprising:
   contacting, by a user who owns said two digital video recorders, said personal TV service center to request an authorization for data transfer between said two digital video recorders;
   sending, by said personal TV service center, to the user an authorization object containing each digital video recorder's public key; and
   exchanging, by said two digital video recorders, signed encrypted certificates based on the stored private keys;
   wherein if both digital video recorders can decrypt and verify the signature of the other, a one-time session key is then used to encrypt the data during the transfer.
69. The method of enumerated example embodiment 68, wherein said personal TV service center maintain a record of authorized data transfer operation, including two digital video recorders' identification information, for later auditing purposes.
70. The method of enumerated example embodiment 69, wherein said record is uploaded to said personal TV service center upon completion of said authorized data transfer operation.

## Claims

1. A system for remotely programming a digital video recorder, comprising:
a mobile device;
a digital video recorder, the digital video recorder receives multimedia programs;
a module at the digital video recorder that receives an event from the mobile device instructing the digital video recorder to record a multimedia program, the user selects the multimedia program for the digital video recorder to record via a user interface displayed on the mobile device.

2. A method for remotely programming a digital video recorder, comprising:
displaying, by a mobile device, a digital video recorder selection user interface that allows a user to select at least one digital video recorder that is registered to the user;
displaying, by the mobile device, a multimedia recording user interface that allows the user to select a multimedia program for the selected at least one digital video recorder to record;
sending, by the mobile device, an event for the selected at least one digital video recorder to record the selected multimedia program.

3. The system of Claim 1 or method of Claim 2, wherein the mobile device is a personal digital assistant.

4. The system of Claim 1 or method of Claim 2, wherein the mobile device displays a user interface to the user that allows the user to select the digital video recorder.

5. The system of Claim 1 or method of Claim 2, wherein the digital video recorder downloads the selected multimedia program from a source over an Internet connection.

6. The system of Claim 1 or method of Claim 2, wherein the digital video recorder downloads the selected multimedia program from another digital video recorder.

7. The system of Claim 1 or method of Claim 2, wherein the digital video recorder records the selected multimedia program from a broadcast source.

8. The system of Claim 1 or method of Claim 2, wherein the digital video recorder is among a plurality of digital video recorders accessible over a network.

9. The system of Claim 1, wherein the user interface displays a program guide to the user and allows the user to select a multimedia program for recording by the digital video recorder from the program guide.

10. The method of Claim 2, wherein the multimedia recording user interface displays a program guide to the user and allows the user to select a multimedia program for recording by the digital video recorder from the program guide.

11. The system of Claim 1 or method of Claim 2, wherein the mobile device communicates, via the Internet, with a server that collects events for the digital video recorder.

12. A use of one or more computer systems for performing a method comprising:
allowing a user to select at least one digital video recorder that is registered to the user and to select a program for the selected at least one digital video recorder to record, using a user interface that is accessible via a server over an Internet connection;
wherein the selected at least one digital video recorder receives multimedia programs;
wherein the selected at least one digital video recorder is among a plurality of digital video recorders accessible over a network by the server; and
instructing, by the server, the selected at least one digital video recorder to record the selected program.

13. The use of the one or more computer systems as recited in Claim 12,
wherein the user interface displays a program guide to the user and allows the user to select a program from the program guide for recording; and/or
wherein the selected at least one digital video recorder downloads the selected program from a source over an Internet connection, downloads the selected program from another digital video recorder, and/or records the selected program from a broadcast source.

14. The use of the one or more computer systems as recited in Claim 12,
wherein the server validates that the user is authorized to program the selected at least one digital video recorder before instructing the selected at least one digital video recorder to record the selected program; and/or
wherein the server stores recording instructions for each user's registered digital video recorders in an event list; and/or
wherein the server retrieves an event list and sends information in said event list to a specific digital video recorder.

15. A computer readable medium storing instructions, which when executed by one or more processors, cause implementation of any of the systems or methods recited in Claims 1-11, and/or cause any of the uses of the one or more computer systems recited in Claims 12-14.
